# EUROPÄISCHE PATENTSCHRIFT

(11) **EP 1 477 435 B1**
(45) Veröffentlichungstag und Bekanntmachung des Hinweises auf die Patenterteilung: **15.02.2006**
(21) Anmeldenummer: 04011016.5
(22) Anmeldetag: 10.05.2004
(51) Int. Cl.: B65G 17/12

(54) **Vertikalumlaufförderer**
Endless vertical conveyor
Transporteur vertical sans fin

(30) Priorität: 12.05.2003 DE 10321169
(43) Veröffentlichungstag der Anmeldung: 17.11.2004
(73) Patentinhaber: Apparatebau Ihlbrock GmbH, 42477 Radevormwald (DE)
(72) Erfinder: Arnolds, Dirk, 42928 Wermelskirchen (DE); Jablonowski, Bernd, 42853 Wermelskirchen (DE)
(74) Vertreter: Mann, Volker

(56) Entgegenhaltungen:
- EP-A- 0 396 925
- FR-A- 2 443 985
- FR-A- 2 756 814
- GB-A- 1 571 497

## Beschreibung

Die Erfindung betrifft eine vertikale in einem Arbeitsturm angeordnete Fördereinrichtung zum Transport von Stückgut zwischen zwei übereinanderliegenden Arbeitsebenen mit endlos umlaufenden je zwei inneren und äußeren Synchronriemen, an denen in ihrer Arbeitsteilung nach unten querstabile Plattformen befestigt sind, auf denen das Stückgut von einer Arbeitsebene in die andere gefördert wird, wobei die querstabilen Plattformen aus einzelnen Elementen gebildet werden, die die inneren und äußeren Synchronriemen miteinander verbinden und die nur eine Bewegung der einzelnen Elemente in Laufrichtung der Innen- und Außenbänder zulassen.

Vertikale Fördereinrichtungen zum Transport von Stückgut zwischen zwei übereinanderliegenden Arbeitsebenen sind an sich bekannt (DE 198 17 881 C1, DE 39 150 74 A1, DE 38 337 50 A1, EP 1 228 984 A1, EP 1 083 429 A3 und EP 0 396 925 A1).

Wie beispielsweise aus der DE 0003915074 A1 bekannt ist, werden Stückgutförderer zum Transport unterschiedlicher Stückgüter, wie Pakete, Kanister, in Folie verpackte Pakete und unverpackte Produkte usw. in zunehmendem Maße eingesetzt, um die Stückgüter in möglichst kurzer Zeit zwischen zwei übereinanderliegenden Arbeitsebenen von einer Ausgabestation zu einer Entnahmestation zu befördern.

Das Dokument GB1 571 497 beschreibt eine vertikale Fördereinrichtung bei der als Verbindungsbänder Ketten verwendet werden.

Die bekannten Stückgutförderer (C-Förderer) zeichnen sich dadurch aus, dass die Förderrichtung in der oberen Entnahmestation entgegengesetzt zur Förderrichtung verläuft, mit der das Stückgut auf der unteren Aufgabestation zugeführt wird. Demgegenüber verlaufen die Förderrichtungen bei den sogenannten S-Förderer in der Aufgabe- und der Entnahmestation in gleicher Richtung.

In allen bekannten Fällen sind die Fördertische beidseitig mit einem Tischriemen versehen, an denen Stützplatten befestigt sind, die eine Teilung der Fördertische festlegen. Zwischen einander gegenüberliegenden zugeordneten Stützplatten erstrecken sich Tragestäbe zur Bildung einer zur Aufnahme der Stückgüter geeigneten Plattform.

Wie in der DE 39 15 074 A1 eingehend geschildert wird, bestehen bei den bekannten Stückgutförderern Stabilitätsprobleme mit den Befestigungen der Stützplatten an den Tischriemen. In der DE 39 15 074 A1 wird versucht dieses Problem durch mehrere Tragestäbe zwischen gegenüberliegende Stützplatten zu lösen, die eine Tischfläche für das Stückgut bilden.

Dieser Lösungsweg ist jedoch unbefriedigend, weil die Stützplatten starr sind und unrund über die Führungsrollen der Tischriemen in dem vertikalen Stückgutförderer laufen. Dies bedeutet, dass die Vermeidung der Lärmbelästigung, die als eine der Aufgaben der DE 39 15 074 A1 genannt wird, nicht wirkungsvoll erreicht wird.

In der DE 101 17 665 A1 werden Vertikalförderer mit querstabilen Plattformen beschrieben, die aus einzelnen Elementen gebildet werden. Die Elemente sind durch Kettenglieder beweglich miteinander verbunden. Der Betrieb des Vertikalförderers ist unrund und ist durch die Verwendung von Ketten mit großem Lärm verbunden. Ähnliche Vertikalförderer sind aus EP 188 297 B1, EP 142 726 A2 und DE 39 15 074 A1 bekannt.

Aus der EP 0 396 925 A1 ist bekannt, dass die inneren und äußeren Antriebselemente und Tischriemen durch mit Stahlseileinlagen oder dergleichen verfestigte Gummizahnriemen gebildet sind und die vorderen Stützplatten, welche die in der Entnahmestation in Förderrichtung vordere Tischkante mittels des vorderen Haltestabes tragen. Der Haltestab ist länger als die Tischkante und ist durch in Förderichtung waagrecht ausgebildete Langlöcher in dem Tischriemen gesteckt. Diese Anordnung bewirkt eine unruhige und ruckweise Beförderung des Stückgutes.

Aufgabe der vorliegenden Erfindung sind vertikale in einem Arbeitsturm angeordnete Fördereinrichtungen zum Transport von Stückgut zwischen zwei übereinanderliegenden Arbeitsebenen mit endlos umlaufenden je zwei Innen- und Außenbändern, bei den die Stützplatten gleichmäßig und rund über die Führungsrollen für die Zugbänder, wie Tischriemen oder anderer Zugvorrichtungen, laufen.

Es wurden vertikale in einem Arbeitsturm angeordnete Fördereinrichtungen zum Transport von Stückgut zwischen zwei übereinanderliegenden Arbeitsebenen mit endlos umlaufenden je zwei Innen- und Außenbändern, an denen in ihrer Arbeitsteilung nach unten querstabile Plattformen befestigt sind und auf denen das Stückgut von einer Arbeitsebene in die andere gefördert wird, gefunden, die dadurch gekennzeichnet sind, dass
- als Innen- und Außenbänder Synchronriemen verwendet werden,
- die nach unten querstabile Plattform aus einzelnen Elementen gebildet wird, die die inneren und äußeren Synchronriemen miteinander verbinden,
- wobei jedes Element aus zumindest zwei gegenüberliegenden mit einer Brücke verbundenen Kettengliedern zwischen den inneren und äußeren Synchronriemen besteht,
- wobei folgende Kettenglieder durch Verhaken verbunden sind und einen Anschlag aufweisen, so dass sie sich lediglich in Richtung ihrer Umlenkung um die Umlenkräder entsprechend abwinkeln können, während sie in Gegenrichtung gegen eine Abwinklung über eine Gerade hinaus gesperrt sind und
- wobei Haltestäbe symmetrisch an der Befestigung der nach unten querstabilen Plattform an den Synchronriemen angebracht sind.

Die erfindungsgemäßen Fördereinrichtungen laufen gleichmäßig und rund über die Führungsrollen für die Synchronriemen.

Die erfindungsgemäßen Fördereinrichtungen können als C-Förderer oder S-Förderer verwendet werden.

Erfindungsgemäß besteht ein Element aus zumindest zwei Kettengliedern, die durch eine Brücke verbunden sind. Die einzelnen Elemente bilden gemeinsam die querstabile Plattform, die durch die Brückenteile zwischen den Kettengliedern gebildet wird.

Es ist auch möglich, dass jedes Element der querstabilen Plattform von mehreren Kettengliedern gebildet wird, die über eine Brücke verbunden sind. Hierdurch wird die Belastbarkeit der querstabilen Plattform erhöht. Im allgemeinen besteht ein Element aus 2 bis 6 Kettengliedern, bevorzugt 2 bis 4 Kettengliedern.

Die Größe der querstabilen Plattform ist in der Regel von dem zu transportierenden Stückgut abhängig und ist in weiten Grenzen variabel.

Eine Plattform mit einer Länge von 1 m besteht in der Regel aus mehreren Kettengliedern in Abhängigkeit des zu fördernden Stückguts.

Die einzelnen Kettenglieder sind so ausgebildet, dass folgende Kettenglieder durch Verhaken verbunden sind und einen Anschlag aufweisen, so dass sie sich lediglich in Richtung ihrer Umlenkung um die Umlenkräder entsprechend abwinkeln können, während sie in Gegenrichtung gegen eine Abwinklung über eine Gerade hinaus gesperrt sind.

Ein Kettenglied besteht beispielsweise aus einem gabelförmigen Rundhaken und seitlichen Noppen, in die sich die Rundhaken des folgenden Kettenglieds verhaken.

Die einzelnen Kettenglieder sind mit den folgenden Kettengliedern durch Verhaken verbunden.

Es sind verschiedenartige Ausführungsformen für Kettenglieder möglich, die bei den erfindungsgemäßen Fördereinrichtungen eingesetzt werden können.

Als Beispiel seien Kettenglieder mit den geforderten Eigenschaften genannt, die als "Energieketten" (Firmenschrift der igus GmbH, 51127 Köln, 9/95) bekannt sind.

Die Kettenglieder und die Verbindungsbrücke können aus dem gleichen aber auch aus verschiedenen Materialien sein.

Das Stückgut wird erfindungsgemäß zwischen zwei übereinanderliegenden Arbeitsebenen auf in ihrer Arbeitstellung querstabilen Plattformen transportiert, die an den endlos umlaufenden inneren und äußeren Synchronriemen befestigt sind.

Als innere und äußere Synchronriemen für die erfindungsgemäßen Fördereinrichtungen werden bevorzugt Synchronriemen (Zahnriemen) nach DIN 7721 T1 (9.79) eingesetzt, die über Synchronriemenscheiben nach DIN 7721 T2 (9.79) angetrieben werden.

Bei dem Einsatz in den erfindungsgemäßen Fördereinrichtungen ist es möglich, innere und äußere Synchronriemen mit Einfach- oder Doppel-Verzahnung, bevorzugt mit Einfachverzahnung, zu verwenden.

Erfindungsgemäß werden im allgemeinen Synchronriemen eingesetzt, die durch die Zahnteilungskurzzeichen T 2,5 bis T 20 gekennzeichnet sind. Bevorzugt werden Synchronriemen eingesetzt, die eine Nenndicke im Bereich von 1 bis 8 mm aufweisen.

Die Breite der Synchronriemen liegt im allgemeinen im Bereich von Standard-Zahnriemen nach DIN 7721.

Durch Verwendung des Standardzahnriemens nach DIN 7721 besteht erstmals die Möglichkeit, die Antriebs- und Umlenkräder mit einem wesentlich kleineren Durchmesser auszubilden.

Die Synchronriemenscheiben zum Antrieb der inneren und äußeren Synchronriemen haben eine Zahnteilung, die den Synchronriemen entspricht und einen Außendurchmesser, der sich im wesentlichen nach dem Biegeradius der Kettenglieder richtet.

Für die erfindungsgemäße Fördereinrichtung ist es bevorzugt, Synchronriemen mit einer möglichst kleinen Zahnteilung und möglichst kleinen Synchronriemenscheiben zu verwenden.

Die aus einzelnen Elementen gebildete querstabile Plattform, die die inneren und äußeren Synchronriemen miteinander verbinden, sind an der Vorderseite der querstabilen Plattform durch einen Haltestab mit den Außenriemen und an der Rückseite durch einen weiteren Haltestab mit den Innenriemen verbunden.

Die beiden Haltestäbe sind mit Schrauben an den Außen- bzw. Innenriemen befestigt.

Die Elemente aus den Kettengliedern, die durch eine Brücke verbunden sind und eine querstabile Plattform bilden, können aus Metall und/oder Kunststoff sein. Beispielsweise seien die folgenden Materialien genannt: Aluminium, Stahl, Polypropylen und Polyethylen.

Die inneren und äußeren Synchronriemen sind üblicherweise aus kautschukartigem Material und können zur Erhöhung der Stabilität Metalldrähte oder Metallbänder enthalten.

Die Riemenscheiben sind in der Regel aus Metall, z.B. Edelstahl oder Aluminium.

Der Förderturm weist im oberen und unteren Teil eine Aufnahme-/Abgabeeinrichtung für das zu transportierende Stückgut auf. Im allgemeinen wird das Stückgut über ein Förderband in die Aufnahmeeinrichtung und mit einem Förderband aus der Abgabeeinrichtung befördert. Selbstverständlich sind verschiedene Aufnahme- und Abgabeeinrichtungen möglich, z.B. auch per Hand.

Wie in den Figuren im einzelnen erläutert, ist der Förderturm im Bereich der unteren Aufnahme-/Abgabeeinrichtung zur Aufnahme des Antriebsmotors und zum Spannen der Innen- und Außenbänder breiter gestaltet.

Die inneren und äußeren Synchronriemen haben die gleiche Länge.

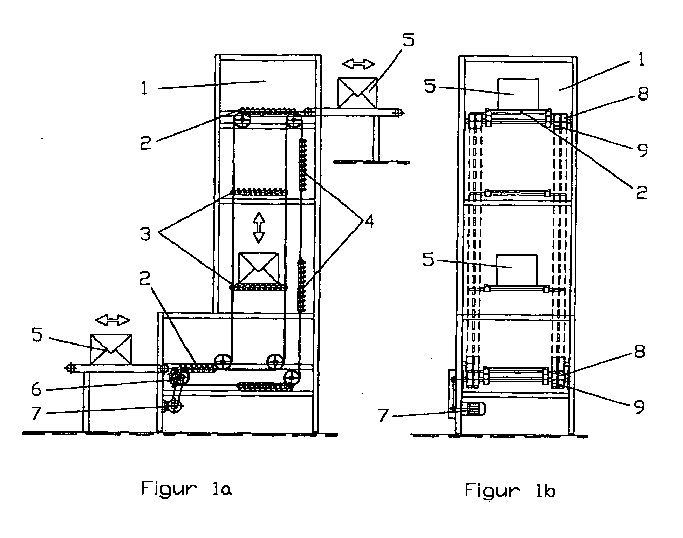

Die erfindungsgemäße Fördereinrichtung für Stückgut soll durch die Figuren 1a und 1 b bis 5 erläutert werden:
Figur 1a zeigt die Fördereinrichtung als "S-Förderer" in der Seitenansicht und 1 b in der Seitenansicht.
   In dem Arbeitsturm (1) erkennt man die querstabile Plattform in Aufnahme- bzw. Abgabestellung (2). Die waagrecht aufgeklappte querstabile Plattform (3) befördert das Stückgut (5) zwischen den verschiedenen Ebenen. Nach Aufnahme bzw. Abgabe des Stückguts (5) wird die querstabile Plattform (4) von einer Ebene in die andere gebracht. Die Spannung der inneren und äußeren Synchronriemen erfolgt über die beweglichen Riemenscheiben (6), die über den Antriebsmotor (7) angetrieben wird. Die inneren und äußeren Synchronriemen laufen über die entsprechenden Riemenscheiben (8,9).

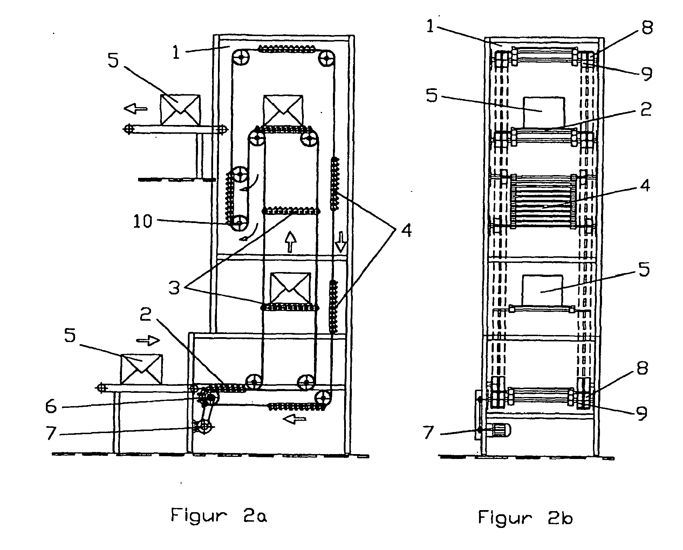

Figur 2a zeigt die Fördereinrichtung als "C-Förderer" in der Frontansicht und 2b in der Seitenansicht.
   In dem Arbeitsturm (1) erkennt man die querstabile Plattform in Aufnahme- bzw. Abgabestellung (2). Die waagrecht aufgeklappte querstabile Plattform (3) befördert das Stückgut (5) zwischen den verschiedenen Ebenen. Nach Aufnahme bzw. Abgabe des Stückguts (5) wird die querstabile Plattform (4) von einer Ebene in die andere gebracht. Die Spannung der inneren und äußeren Synchronriemen erfolgt über die beweglichen Riemenscheiben (6), die über den Antriebsmotor (7) angetrieben wird. Die Außenriemen und Innenriemen laufen über die entsprechenden Riemenscheiben (8,9). Über eine Umlenkrolle (10) wird die querstabile Plattform (3) entgegengesetzt zur Förderrichtung bewegt.

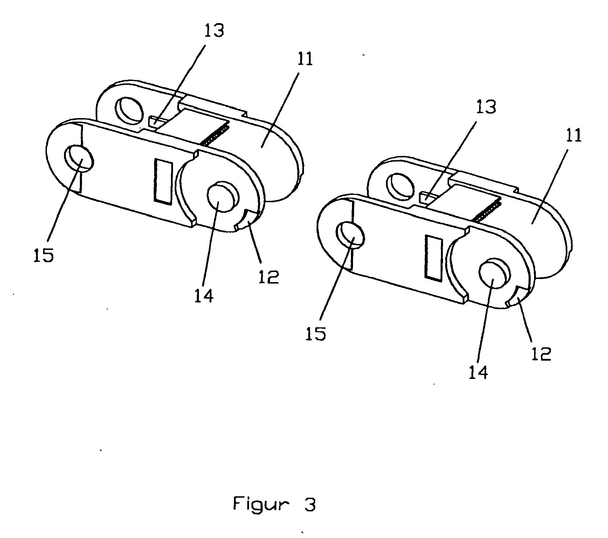

Figur 3 zeigt zwei Kettenglieder (11), die so ausgebildet sind, dass sie einen Anschlag (12) aufweisen, der nur eine Bewegung der einzelnen Kettenglieder und damit der Elemente in die Laufrichtung der inneren und äußeren Synchronriemen zuläßt. Ein Kettenglied (11) besteht aus einem Anschlagnocken (13) und seitlichen Noppen (14), in die sich die entsprechenden Löcher (15) des Rundhaken (13) des folgenden Kettenglieds (11) verhaken.

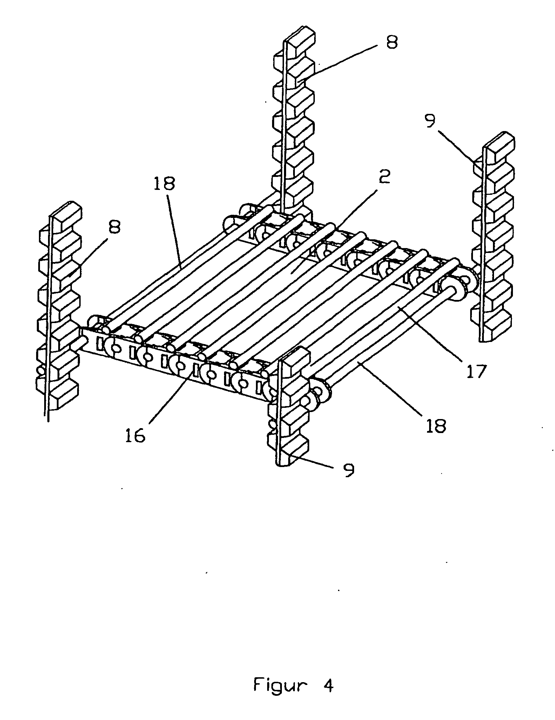

Figur 4 zeigt eine querstabile Plattform (2) mit den inneren und äußeren Synchronriemen (8,9) in Transportstellung. Die Kette aus den Kettengliedern (16) bildet einzelne Elemente, die mit einer Brücke (17) verbunden sind. Die Haltestangen (18) befestigen die querstabile Plattform (2) an den inneren und äußeren Synchronriemen (8,9).

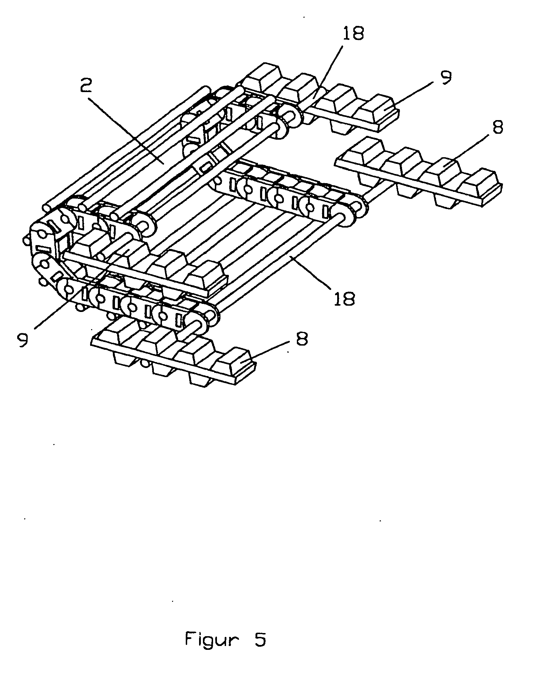

Figur 5 zeigt die Befestigung der querstabilen Plattform (2) an den inneren und äußeren Synchronriemen (8,9) mit den Haltestangen (18).
Die erfindungsgemäße Fördereinrichtung kann wie folgt betrieben werden:
   In dem Arbeitsturm (1) wird das Stückgut (5) von einer unteren Ebene in eine obere Ebene befördert. Im Annahme- und im Abgabebereich ist der Zwischenraum zwischen der abgebenden bzw. annehmenden Vorrichtung bevorzugt in Form eines Dreiecks so klein gestaltet, dass die Übergabe auch von kleinem Stückgut gewährleistet ist. Nach Überführung auf die querstabile Plattform (3) wird das Stückgut (5) nach oben befördert und von der annehmenden Vorrichtung entnommen.

Nach Abgabe des Stückguts (5) rollt die querstabile Plattform über die Umlenkrollen senkrecht nach unten und wird dann wieder in waagrechte Stellung zur Aufnahme von neuem Stückgut aufgeklappt.

Die vorliegende Erfindung betrifft auch die Verwendung der erfindungsgemäßen Fördereinrichtung als C- Förderer oder als S Förderer zum Transport von Stückgut zwischen zwei übereinanderliegenden Arbeitsebenen.

## Patentansprüche

1. Vertikale in einem Arbeitsturm (1) angeordnete Fördereinrichtung zum Transport von Stückgut (5) zwischen zwei übereinanderliegenden Arbeitsebenen mit endlos umlaufenden je zwei Innen- und Außenbändern, an denen in ihrer Arbeitstellung nach unten querstabile Plattformen (2,3,4) befestigt sind und auf denen das Stückgut (5) von einer Arbeitsebene in die andere gefördert wird, **dadurch gekennzeichnet, dass**
• als Innen- und Außenbänder Synchronriemen (8,9) verwendet werden,
• die nach unten querstabile Plattform (2,3,4) aus einzelnen Elementen gebildet wird, die die inneren und äußeren Synchronriemen (8,9) miteinander verbinden,
• wobei jedes Element aus zumindest zwei gegenüberliegenden mit einer Brücke verbundenen Kettengliedern (11) zwischen den inneren und äußeren Synchronriemen besteht,
• wobei ein Kettenglied (11) aus einem gabelförmigen Rundhaken, der auf der einen Seite jeweils Noppen (14) und auf der anderen Seite jeweils entsprechende Löcher (15) aufweist, in die sich die Noppen (14) des Rundhakens des folgenden Kettenglieds (11) verhaken,
• wobei die Kettenglieder (11) auf der einen Seite jeweils einen Anschlag (12) und auf der anderen Seite einen Anschlagnocken (13) aufweisen, so dass sie sich lediglich in Richtung ihrer Umlenkung um die Umlenkräder (10) entsprechend abwinkeln können, während sie in Gegenrichtung gegen eine Abwinklung über eine Gerade hinaus gesperrt sind und
• wobei Haltestäbe (18) symmetrisch an der Befestigung der nach unten querstabilen Plattform (2,3,4) an den Synchronriemen (8,9) angebracht sind.

2. Vertikale in einem Arbeitsturm (1) angeordnete Fördereinrichtung nach Anspruch 1, **dadurch gekennzeichnet, dass** ein Element aus zumindest zwei Kettengliedern (11) besteht, die durch eine Brücke verbunden sind und gemeinsam zu einer nach unten querstabilen Plattform (2,3,4) ausgestaltet sind.

3. Vertikale in einem Arbeitsturm (1) angeordnete Fördereinrichtung nach den Anspruch 1 und 2, **dadurch gekennzeichnet, dass** ein Element aus 2 bis 6 Kettengliedern (11) besteht, wobei je zwei gegenüberliegende Kettenglieder (11) mit einer Brücke verbunden sind.

4. Vertikale in einem Arbeitsturm (1) angeordnete Fördereinrichtung nach den Ansprüchen 1 bis 3, **dadurch gekennzeichnet, dass** innere und äußere Synchronriemen (8,9) mit Einfach- oder Doppel-Verzahnung verwendet werden.

5. Vertikale in einem Arbeitsturm (1) angeordnete Fördereinrichtung nach den Ansprüchen 1 bis 4, **dadurch gekennzeichnet, dass** Synchronriemen (8,9) eingesetzt werden, die durch die Zahnteilungskurzzeichen T 2,5 bis T 20 **gekennzeichnet** sind.

6. Vertikale in einem Arbeitsturm (1) angeordnete Fördereinrichtung nach den Ansprüchen 1 bis 5, **dadurch gekennzeichnet, dass** Synchronriemen (8,9) mit einer möglichst kleinen Zahnteilung und möglichst kleinen Synchronriemenscheiben verwendet werden.

7. Vertikale in einem Arbeitsturm (1) angeordnete Fördereinrichtung nach den Ansprüchen 1 bis 6, **dadurch gekennzeichnet, dass** bei der aus einzelnen Elementen gebildeten querstabilen Plattform (2,3,4) an der Vorderseite die querstabile Plattform durch einen Haltestab (18) mit den Außenbändern und an der Rückseite durch einen weiteren Haltestab mit den Innenbändern verbunden ist.

8. Vertikale in einem Arbeitsturm (1) angeordnete Fördereinrichtung nach den Ansprüchen 1 bis 7, **dadurch gekennzeichnet, dass** beide Haltestäbe (18) mit Nieten an den Außen- bzw. Innenbändern (8,9) befestigt sind.

9. Verwendung der vertikalen in einem Arbeitsturm (1) angeordneten Fördereinrichtung nach den Ansprüchen 1 bis 8 als C-Förderer.

10. Verwendung der vertikalen in einem Arbeitsturm (1) angeordneten Fördereinrichtung nach den Ansprüchen 1 bis 8 als S-Förderer.

## Claims

1. Conveying device arranged vertically in an operating tower (1) for the transport of bulk material (5) between two working levels arranged above one another with two endless circulating belts each on the inside and outside, secured to which, in their operating position, two downwardly transversely stable platforms (2, 3, 4) are secured, and on which the bulk material (5) is conveyed from one operating level to the other, **characterised in that**
• synchronised belts (8, 9) are used as the inside and outside belts,
• the downwardly transversely stable platform (2, 3, 4) is formed from individual elements, which connect the inside and outside synchronous belts (8, 9) to one another,
• whereby each element consists of at least two opposed chain links (11) connected by a bridge, between the inside and outside synchronous belts,
• whereby one chain link (11) consists of a fork-shaped circular hook, which on one side in each case exhibits knobs (14) and, on the other, corresponding holes (15) into which the knobs (14) of the circular hook of the following chain link (11) engage,
• whereby the chain links (11) on the one side exhibit in each case a stop (12) and on the other side exhibit a stop cam (13), so that they can only turn at an angle accordingly in the direction of their deflection around the deflection wheels (10), while in the opposite direction they are blocked against angle deflection by a straight element, and
• whereby retaining bars (18) are located symmetrically at the synchronous belts (8, 9) at the securing arrangement of the downwardly transversely stable platform (2, 3, 4).

2. Conveying device arranged vertically in an operating tower (1) according to Claim 1, **characterised in that** an element consists of at least two chain links, which are connected by a bridge and are jointly assigned to a downwardly transversely stable platform (2, 3, 4).

3. Conveying device arranged vertically in an operating tower (1) according to Claim 1 and 2, **characterised in that** an element consists of 2 to 6 chain links (11) whereby every two opposed chain links (11) are connected by a bridge.

4. Conveying device arranged vertically in an operating tower (1) according to Claims 1 to 3, **characterised in that** inside and outside synchronous belts (8, 9) are used with single or double tooth arrangements.

5. Conveying device arranged vertically in an operating tower (1) according to Claims 1 to 4, **characterised in that** synchronous belts (8, 9) are used, which are **characterised by** the tooth distribution abbreviated designation T 2.5 to T 20.

6. Conveying device arranged vertically in an operating tower (1) according to Claims 1 to 5, **characterised in that** synchronous belts (8, 9) are used with the smallest possible tooth distribution and smallest possible synchronisation pulleys.

7. Conveying device arranged vertically in an operating tower (1) according to Claims 1 to 6, **characterised in that**, with regard to the transversely stable platform (2, 3, 4) formed from individual elements, the platform is connected on the front face to the outside belts by a retaining bar (18) and on the rear face to the inside belts by means of a further retaining bar.

8. Conveying device arranged vertically in an operating tower (1) according to Claims 1 to 7, **characterised in that** both retaining rods (18) are secured by rivets to the outside and inside belts (8, 9) respectively.

9. Use of the conveying device arranged vertically in an operating tower (1) according to Claims 1 to 8 as a C-conveyor.

10. Use of the conveying device arranged vertically in an operating tower (1) according to Claims 1 to 8 as an S-conveyor.

## Revendications

1. Dispositif de transport vertical placé dans une cage de travail (1) et destiné à transporter des colis de détail (5) entre deux niveaux de travail superposés, ledit dispositif de transport comportant deux bandes intérieure et extérieure circulant en boucle auxquelles des plates-formes (2, 3, 4), stables transversalement vers le bas, sont fixées dans leur position de travail et sur lesquelles le colis de détail (5) est transporté d'un niveau de travail dans l'autre, **caractérisé en ce que**
- des courroies de déplacement synchrone (8, 9) sont utilisées comme bandes intérieure et extérieure,
- la plate-forme (2, 3, 4) stable transversalement vers le bas est formée par des éléments individuels qui relient entre elles les courroies de déplacement synchrone intérieure et extérieure (8, 9),
- chaque élément étant constitué d'au moins deux maillons de chaîne (11), placés l'un en face de l'autre et reliés entre eux par un pont, entre les courroies de déplacement synchrone intérieure et extérieure,
- un maillon de chaîne (11) étant constitué d'un crochet arrondi en forme de fourche, qui comporte d'un côté un picot (14) et de l'autre côté un trou correspondant (15) dans lequel vient s'accrocher le picot (14) du crochet arrondi du maillon de chaîne suivant (11),
- les maillons de chaîne (11) comportant d'un côté une butée (12) et de l'autre côté un ergot de butée (13) permettant aux maillons de chaîne de se plier de façon correspondante seulement dans la direction de leur déviation autour des roues de déviation (6) tandis que, dans le sens opposé, ils sont empêchés de se plier au-delà d'une droite,
- des barres de retenue (18) étant montées symétriquement sur les courroies de déplacement synchrone (8, 9) au niveau de la fixation de la plate-forme (2, 3, 4), stable transversalement vers le bas.

2. Dispositif de transport vertical placé dans une cage de travail (1) selon la revendication 1, **caractérisé en ce qu'**un élément est constitué d'au moins deux maillons de chaîne qui sont reliés par un pont et qui sont conformés pour former ensemble une plate-forme (2, 3, 4) stable transversalement vers le bas.

3. Dispositif de transport vertical placé dans une cage de travail (1) selon les revendications 1 et 2, **caractérisé en ce qu'**un élément est constitué de 2 à 6 maillons de chaîne, deux maillons de chaîne (11) opposés étant à chaque fois reliés par un pont.

4. Dispositif de transport vertical placé dans une cage de travail (1) selon les revendications 1 à 3, **caractérisé en ce que** l'on utilise des courroies de déplacement synchrone intérieur et extérieur (8, 9) avec une denture simple ou double.

5. Dispositif de transport vertical placé dans une cage de travail (1) selon les revendications 1 à 4, **caractérisé en ce que** l'on utilise des courroies de déplacement synchrone (8, 9) qui sont **caractérisées par** les dénominations de pas de denture T 2,5 à T 20.

6. Dispositif de transport vertical placé dans une cage de travail (1) selon les revendications 1 à 5, **caractérisé en ce que** l'on utilise des courroies de déplacement synchrone (8, 9) avec une denture la plus petite possible et des poulies de courroie de déplacement synchrone les plus petites possible.

7. Dispositif de transport vertical placé dans une cage de travail (1) selon les revendications 1 à 6, **caractérisé en ce que**, dans le cas de la plate-forme (2, 3, 4) stable transversalement formée par des éléments individuels, la plate-forme stable transversalement est reliée du côté avant aux bandes extérieures par une barre de retenue (18) et du côté arrière aux bandes intérieures par une autre barre de retenue.

8. Dispositif de transport vertical placé dans une cage de travail (1) selon les revendications 1 à 7, **caractérisé en ce que** les deux barres de retenue (18) sont fixées aux bandes extérieure respectivement intérieure (8, 9) par des rivets.

9. Utilisation du dispositif de transport vertical placé dans une cage de travail (1) selon les revendications 1 à 8 comme transporteur en C.

10. Utilisation du dispositif de transport vertical placé dans une cage de travail (1) selon les revendications 1 à 8 comme transporteur en S.
